# DEMANDE DE BREVET EUROPEEN

(11) **EP 3 326 871 A1**
(43) Date de publication de la demande: **30.05.2018**
(21) Numéro de dépôt: 17203667.5
(22) Date de dépôt: 24.11.2017
(51) Int. Cl.: B60S 1/40, B60S 1/38

(54) **ADAPTATEUR, CONNECTEUR ET DISPOSITIF DE CONNEXION**

(30) Priorité: 25.11.2016 FR 1661480
(71) Demandeur: Valeo Systèmes d'Essuyage, 78322 Le Mesnil Saint Denis (FR)
(72) Inventeur: CAILLOT, Gérald, 78322 LE MESNIL SAINT DENIS (FR); JARASSON, Jean-Michel, 78322 LE MESNIL SAINT DENIS (FR); IZABEL, Vincent, 78322 LE MESNIL SAINT DENIS (FR); MOULEYRE, Guillaume, 63500 ISSOIRE (FR); TERRASSE, William, 63500 ISSOIRE (FR)
(74) Mandataire: Valeo Systèmes d'Essuyage

(57) **Abrégé**

La présente invention concerne un adaptateur (26, 26') permettant de relier un connecteur (24, 24', 24", 24''', 24'''') de balai d'essuie-glace (10) à un bras d'entraînement (14), l'adaptateur (26, 26') présentant un logement (45) délimité par deux flancs (42a, 42b) destiné à recevoir une tête (76) du connecteur (24, 24', 24",24"',24""), la tête (76) du connecteur (24, 24', 24", 24''', 24'''') et au moins un flanc (42a, 42b) de l'adaptateur (26, 26') portant des éléments d'articulation complémentaires configurés pour coopérer ensemble en définissant un moyen de fixation et de pivotement entre l'adaptateur (26, 26') et le connecteur (24, 24', 24", 24''', 24''''), caractérisé en ce que l'élément d'articulation (60a, 60b) porté par le flanc (42a, 42b) de l'adaptateur (26, 26') est une protubérance ayant une section transversale régulière non cylindrique conformée pour coopérer avec un creux correspondant ménagé dans la tête du connecteur, la protubérance faisant saillie d'une paroi (42a, 42) en s'étendant dans le logement (45).

L'invention a aussi pour objet un connecteur pour relier un balai d'essuie-glace à un adaptateur de bras d'entraînement et un dispositif de connexion comprenant un adaptateur et un connecteur.

## Description

La présente invention concerne un adaptateur permettant de relier un connecteur de balai d'essuie-glace à un bras d'entraînement. L'invention a aussi pour objet un connecteur permettant de relier un balai d'essuie-glace à un adaptateur de bras d'entraînement. L'invention a encore pour objet un dispositif de connexion comprenant un adaptateur et un connecteur.

Les essuie-glaces comprennent en général un bras d'entrainement, effectuant un mouvement de va-et-vient angulaire et des balais allongés, porteurs eux-mêmes de lames racleuses réalisées en une matière élastique. Les balais sont réalisés sous la forme soit, dans une version classique, d'étriers articulés qui tiennent la lame racleuse en plusieurs endroits discrets en lui conférant un cintrage lui permettant d'épouser l'éventuelle courbure du pare-brise soit, dans une version plus récente dénommée "*flat blade*" (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai alors que l'adaptateur est solidaire du bras.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur. Dans la technique actuelle, l'un des organes, tel que le connecteur, comprend en général un axe cylindrique qui définit l'axe d'articulation et qui est reçu dans un logement de forme complémentaire cylindrique de l'autre organe.

Toutefois, le contact cylindrique entre le connecteur et l'adaptateur engendre des frottements relativement importants qui peuvent accélérer l'usure des pièces en contact.

De plus le montage de l'adaptateur sur le connecteur, par exemple pour le remplacement du balai, n'est pas ergonomique. En effet, l'utilisateur doit forcer sur l'adaptateur pour écarter les parois du logement permettant l'insertion du connecteur.

Un des buts de la présente invention est donc de proposer un connecteur et/ou un adaptateur qui permettent de diminuer le frottement généré entre ces deux pièces.

Un autre but de la présente invention est de proposer un connecteur et un adaptateur pouvant être montés ou démontés de façon ergonomique.

L'invention propose à cet effet un adaptateur permettant de relier un connecteur de balai d'essuie-glace à un bras d'entraînement, l'adaptateur présentant un logement délimité par deux flancs destiné à recevoir une tête du connecteur, la tête du connecteur et au moins un flanc de l'adaptateur portant des éléments d'articulation complémentaires configurés pour coopérer ensemble en définissant un moyen de fixation et de pivotement entre l'adaptateur et le connecteur, caractérisé en ce que l'élément d'articulation porté par le flanc de l'adaptateur est une protubérance ayant une section transversale régulière non cylindrique conformée pour coopérer avec un creux correspondant ménagé dans la tête du connecteur, la protubérance faisant saillie d'une paroi en s'étendant dans le logement.

Le guidage en pivotement du connecteur dans l'adaptateur est ainsi assuré par des éléments d'articulation complémentaires non cylindriques. On diminue ainsi les surfaces en contact lors du mouvement relatif entre le connecteur et l'adaptateur, ce qui permet de limiter les frottements et donc l'usure des pièces. Les éléments d'articulation complémentaires non cylindriques permettent en outre l'encliquetage élastique de l'adaptateur et du connecteur lors du montage de l'adaptateur. Ils permettent également de centrer le connecteur dans l'adaptateur au moment de l'assemblage ainsi qu'une ouverture progressive de l'adaptateur du fait de la coopération des éléments d'articulation non cylindriques. Le système de montage et démontage de l'adaptateur sur le connecteur est donc plus ergonomique.

La section transversale de la protubérance est définie par la coupe de la protubérance par un plan parallèle au flanc portant la protubérance.

Selon une ou plusieurs caractéristiques de l'adaptateur, prise seule ou en combinaison :
- la protubérance s'inscrit dans une forme sphérique ; la section transversale est alors un cercle,
- la protubérance présente une forme tronconique ; la section transversale est alors un cercle,
- la protubérance présente une forme générale polygonale à côtés chanfreinés ; la section transversale est alors un polygone régulier,
- l'adaptateur comprend deux éléments d'articulation chacun porté par un flanc respectif,
- les éléments d'articulation sont symétriques par rapport à un plan longitudinal médian de l'adaptateur, perpendiculaire à une paroi transversale de l'adaptateur reliant les deux flancs,
- les flancs du logement sont parallèles entre eux et configurés pour coopérer avec la tête du connecteur de manière à guider l'insertion et le maintien de la tête du connecteur dans le logement,
- la protubérance s'inscrit dans une forme sphérique, la dimension du cercle dans lequel s'inscrit la section de l'élément d'articulation au niveau du flanc portant l'élément d'articulation étant supérieure à la surface dudit flanc.

L'invention a aussi pour objet un connecteur permettant de relier un balai d'essuie-glace à un adaptateur de bras d'entraînement, le connecteur présentant une tête surmontant une embase destinée à être fixée au balai d'essuie-glace, la tête étant configurée pour être reçue dans un logement de l'adaptateur, la tête du connecteur et au moins un flanc de l'adaptateur portant des éléments d'articulation complémentaires configurés pour coopérer pour définir un moyen de fixation et de pivotement entre l'adaptateur et le connecteur, caractérisé en ce que l'élément d'articulation porté par la tête du connecteur est un creux ayant une ouverture à bord régulier non cylindrique conformé pour coopérer avec une protubérance de l'élément d'articulation porté par le flanc de l'adaptateur.
- le creux s'inscrit dans une forme sphérique ou tronconique ou polygonale à côtés chanfreinés,
- le connecteur comprend deux éléments d'articulation chacun porté par une face latérale respective de la tête,
- les éléments d'articulation sont symétriques par rapport à un plan longitudinal médian du connecteur,
- les creux sont borgnes ou traversants,
- les faces latérales de la tête sont parallèles entre elles et configurées pour coopérer avec le logement de l'adaptateur pour guider l'insertion et le maintien de la tête du connecteur dans le logement,
- le creux s'inscrit dans une forme sphérique, la dimension du cercle dans lequel s'inscrit la section de l'élément d'articulation dans la face latérale portant l'élément d'articulation étant supérieure à la surface de ladite face latérale.

L'invention a aussi pour objet un dispositif de connexion comprenant un adaptateur tel que décrit précédemment et un connecteur tel que décrit précédemment.

Selon une ou plusieurs caractéristiques du dispositif de connexion prise seule ou en combinaison :
- le moyen de fixation et de pivotement est réalisé par encliquetage élastique,
- l'élément d'articulation porté par le flanc de l'adaptateur est une protubérance s'inscrivant dans une forme sphérique et l'élément d'articulation porté par la tête du connecteur est un creux s'inscrivant dans une forme complémentaire sphérique ou présentant une forme tronconique ou cylindrique ou polygonale à côtés chanfreinés,
- l'élément d'articulation porté par le flanc de l'adaptateur est une protubérance de forme tronconique et l'élément d'articulation porté par la tête du connecteur est un creux s'inscrivant dans une forme complémentaire tronconique ou cylindrique ou polygonale à côtés chanfreinés,
- l'élément d'articulation porté par le flanc de l'adaptateur est une protubérance présentant une forme polygonale à côtés chanfreinés et l'élément d'articulation porté par la tête du connecteur est un creux cylindrique.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace comportant un balai d'essuie-glace et un bras d'entraînement du balai, qui sont reliés l'un à l'autre par un dispositif de connexion,
- la figure 2 est une vue agrandie du dispositif de connexion de la figure 1 désolidarisé du bras, comprenant un adaptateur et un connecteur,
- les figures 3, 4 et 5 sont des vues schématiques en perspective de l'adaptateur de la figure 2,
- les figures 6 et 7 sont des vues schématiques en perspective du connecteur de la figure 2,
- la figure 8a montre une vue en perspective d'une variante de réalisation du dispositif de connexion, l'adaptateur et le connecteur étant représentés à l'état désassemblé avec l'adaptateur à l'aplomb du connecteur,
- la figure 8b montre une vue similaire à la figure 8a avec l'adaptateur représenté selon une vue en coupe longitudinale,
- la figure 8c montre une vue de dessous du dispositif de connexion de la figure 8a, l'adaptateur et le connecteur étant assemblés,
- la figure 9a montre une vue en coupe transversale d'une autre variante de réalisation de l'essuie-glace,
- la figure 9b montre une vue en perspective du connecteur de l'essuie-glace de la figure 9a,
- la figure 10a montre une vue en coupe transversale d'une autre variante de réalisation de l'essuie-glace,
- la figure 10b montre une vue en perspective du connecteur de l'essuie-glace de la figure 10a,
- la figure 11 a montre une vue en coupe transversale d'une autre variante de réalisation de l'essuie-glace, et
- la figure 11b montre une vue en perspective du connecteur de l'essuie-glace de la figure 11 a.

Les réalisations suivantes sont des exemples.

Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Pour des raisons de clarté, les mêmes éléments ont été désignés par des références identiques.

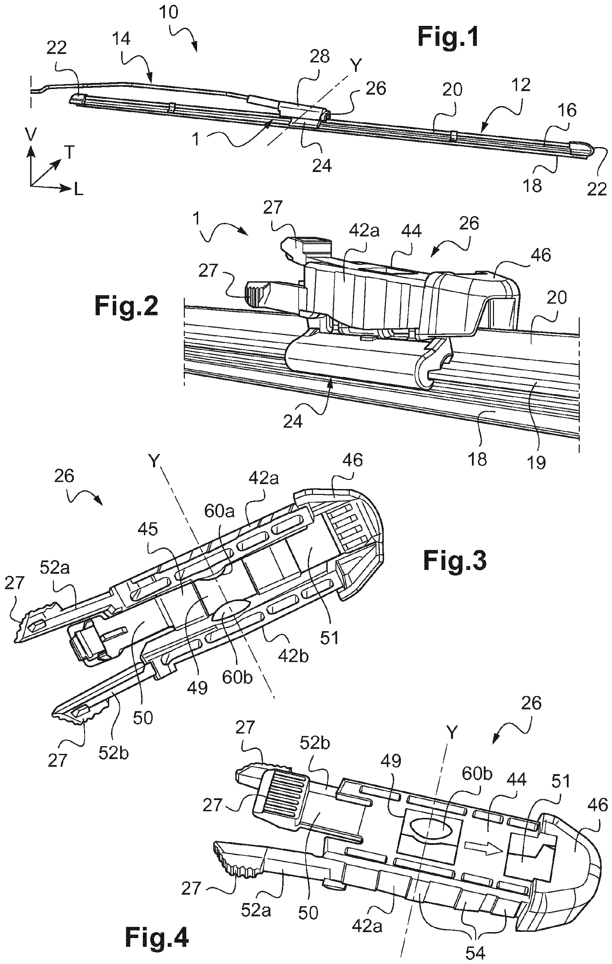

Dans la suite de la description, on adoptera à titre non limitatif des axes longitudinal, vertical et transversal indiqués sur la figure 1 par le trièdre (L, V, T) fixe par rapport au balai 12 mis à plat. L'axe longitudinal L correspond à la direction principale du balai d'essuie-glace à plat.

L'orientation « supérieure » faite en référence au balai d'essuie-glace désigne le côté opposé au panneau vitré à essuyer et l'orientation « inférieure » faite en référence au balai d'essuie-glace désigne le côté de la lame du balai.

La figure 1 montre un essuie-glace 10 de véhicule automobile comportant notamment un balai 12 et un bras 14 d'entraînement du balai 12.

Le balai 12 est de préférence du type flat blade. Il comprend un corps 16 longitudinal, une lame d'essuyage 18, en général en caoutchouc, et au moins une vertèbre 19 (figure 2) qui rigidifie la lame 18 et favorise son application sur un pare-brise de véhicule.

Le corps 16 du balai 12 peut comporter un déflecteur 20 aérodynamique destiné à améliorer le plaquage du balai 12 sur le pare-brise et donc la performance aérodynamique de l'essuie-glace 10.

Le balai 12 peut comporter en outre des embouts d'extrémité 22 pour bloquer longitudinalement la lame 18 et la vertèbre 19 sur le corps 16, ces embouts 22 étant situés à chacune des extrémités longitudinales du corps 16.

Le balai 12 comprend également sensiblement en son milieu un connecteur 24.

Un adaptateur 26 solidaire du bras 14 est monté en pivotement sur le connecteur 24 autour d'un axe de pivotement Y sensiblement perpendiculaire à l'axe longitudinal L du balai 12. Le pivotement du balai 12 vis-à-vis du bras 14 permet ainsi au balai 12 de suivre la courbure du pare-brise lors de ses déplacements.

L'adaptateur 26 peut être désolidarisé du bras 14 par appui sur un bouton d'actionnement, ici des boutons poussoir 27, portés par l'adaptateur 26. L'adaptateur 26 assure la liaison du balai 12 au bras 14 et en particulier à une pièce terminale 28 du bras 14 qui peut être formée d'une seule pièce avec le bras 14 ou rapportée et fixée sur celui-ci.

Les figures 2 à 7 montrent un premier exemple de réalisation de l'adaptateur 26 ainsi que du connecteur 24, l'adaptateur 26 et le connecteur 24 formant un dispositif de connexion 1 du balai 12 au bras 14.

L'adaptateur 26 comprend un corps de forme générale allongée s'étendant dans l'axe longitudinal L comportant deux flancs 42a, 42b sensiblement parallèles entre eux et une paroi transversale 44 sensiblement perpendiculaire aux flancs 42a, 42b.

Les flancs 42a, 42b et la paroi transversale 44 de l'adaptateur 26 définissent un logement 45 (figure 3) destiné à recevoir une partie du connecteur 24.

En particulier, ces flancs 42a, 42b peuvent être configurés pour coopérer avec une tête 76 du connecteur 24 pour guider l'insertion et le maintien de la tête 76 du connecteur 24 dans le logement 45.

Les flancs 42a, 42b sont ici du type à double parois.

Le corps de l'adaptateur 26 est relié à une première de ses extrémités longitudinales à une casquette 46 plus large et plus haute que le corps de l'adaptateur 26 définissant des faces d'appui de l'extrémité extérieure ou avant de la pièce terminale 28.

La paroi transversale 44 du corps de l'adaptateur 26 comprend, sensiblement en son milieu, une fenêtre 49 et à son extrémité longitudinale opposée à la casquette 46 des languettes 50, 52a, 52b élastiquement déformables formant les boutons poussoir précités. Lors du montage de l'adaptateur 26 dans la pièce terminale 28, les boutons poussoir 27 s'engagent par encliquetage élastique dans la pièce terminale 28 pour verrouiller l'adaptateur 26. L'adaptateur 26 comprend en outre un orifice supérieur 51 d'engagement d'une patte de la pièce terminale 28 du bras.

Les flancs latéraux 42a, 42b du corps de l'adaptateur 26 comprennent sur leurs faces externes des nervures 54 correspondant à des portions de plus grande épaisseur des flancs latéraux 42a, 42b.

En outre, au moins une face interne d'un flanc 42a, 42b de l'adaptateur 26 porte un élément d'articulation 60a, 60b configuré pour coopérer avec un élément d'articulation 71 a, 71 b complémentaire porté par le connecteur 24. Les éléments d'articulation 60a, 60b, 71 a, 71 b de l'adaptateur 26 et du connecteur 24 coopèrent ensemble pour définir un moyen de fixation et de pivotement entre l'adaptateur 26 et le connecteur 24. Ce moyen de fixation et de pivotement peut être réalisé par encliquetage élastique (ou clipsage).

Dans l'exemple illustré sur les figures 2 à 7, l'adaptateur 26 comprend deux éléments d'articulation 60a, 60b chacun porté par un flanc 42a, 42b respectif.

Les éléments d'articulation 60a, 60b sont formés par des protubérances faisant saillie d'une paroi 42a, 42b respective, en s'étendant dans le logement 45.

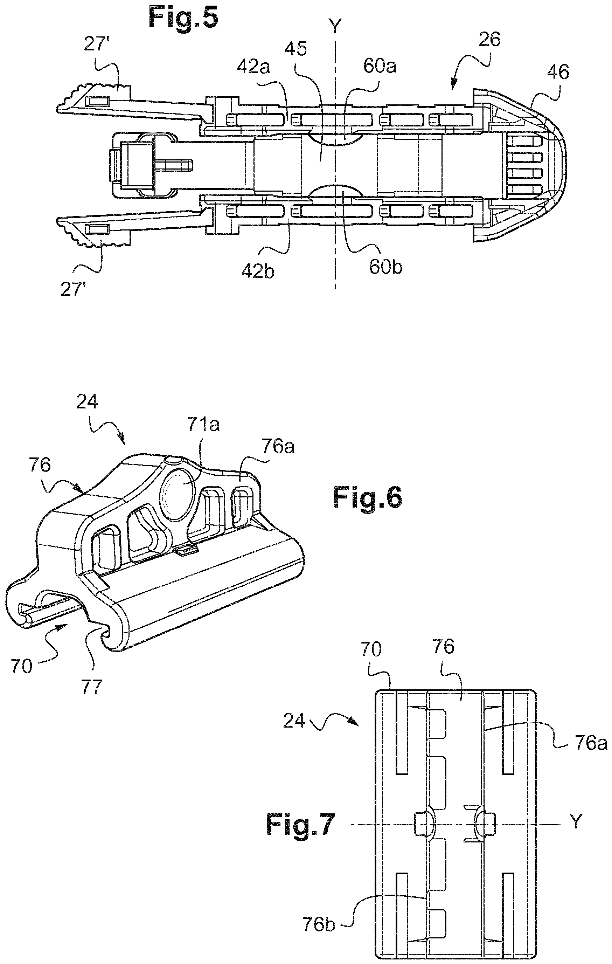

Ces protubérances s'inscrivent dans cet exemple dans une forme sphérique. L'axe de pivotement Y autour duquel les éléments d'articulation peuvent pivoter, s'étend radialement à ces éléments d'articulation 60a, 60b (figure 5).

Chaque flanc latéral 42a, 42b comprend ainsi un élément d'articulation 60a, 60b, les éléments d'articulation 60a, 60b étant ici en regard l'un de l'autre et s'étendant sensiblement l'un vers l'autre, dans le logement 45. Les éléments d'articulation 60a, 60b sont symétriques par rapport à un plan longitudinal médian de l'adaptateur 26, perpendiculaire à la paroi supérieure 44. Chaque élément d'articulation 60a, 60b présente également un plan de symétrie passant par l'axe de pivotement Y et perpendiculaire à l'axe longitudinal L.

Chaque élément d'articulation 60a, 60b a une dimension axiale le long de l'axe de pivotement Y qui est inférieure ou égale au rayon de la sphère dans laquelle s'inscrit la forme de la protubérance. Par ailleurs, la distance inter-éléments d'articulation, mesurée le long de l'axe de pivotement Y, est inférieure à la somme des dimensions des deux éléments d'articulation 60a, 60b le long de l'axe de pivotement Y.

En outre dans l'exemple, la dimension du cercle dans lequel s'inscrit la section de chaque élément d'articulation 60a, 60b au niveau du flanc 42a, 42b respectif portant l'élément d'articulation 60a, 60b est inférieure à la surface dudit flanc 42a, 42b (figure 3).

L'adaptateur 26 décrit ci-dessus est avantageusement unitaire, c'est-à-dire formé d'une seule pièce, par exemple en matériau plastique. Il peut ainsi être fabriqué au cours d'une unique opération de moulage, notamment par injection.

Nous allons maintenant décrire plus en détails le connecteur 24, mieux visible sur les figures 6 et 7.

Le connecteur 24 est agencé pour être rendu solidaire, par exemple par sertissage, du balai 12. Le connecteur 24 peut également assurer une fonction de transport et de distribution d'un liquide de lavage du pare-brise du véhicule.

Le connecteur 24 comprend une embase 70 qui s'étend longitudinalement et transversalement. Cette embase 70 comprend une zone de solidarisation 77 sur le balai 12, et plus particulièrement sur au moins une vertèbre 19 de ce balai. Cette zone de solidarisation 77 prend par exemple la forme d'une saignée ménagée dans l'embase 70, cette saignée étant bordée par deux crochets aptes à venir en prise sur le balai.

Dans l'exemple représenté, le balai 12 comprend deux vertèbres 19 parallèles et coplanaires qui sont espacées l'une de l'autre. Le bord longitudinal de chaque vertèbre 19 est reçu dans la saignée du connecteur 24.

L'embase 70 est surmontée d'une tête 76, par exemple issue de matière avec l'embase 70. Cette tête 76 présente une dimension transversale inférieure à celle de l'embase 70 et une dimension longitudinale sensiblement égale à celle de l'embase 70. La tête 76 est par exemple centrée sur l'embase 70.

Les faces latérales 76a, 76b de la tête 76 sont par exemple planes, parallèles entre elles, des portions de plus petites épaisseurs pouvant cependant être ménagées dans ces faces latérales pour diminuer la quantité de matière utilisée pour la réalisation du connecteur 24.

Les faces latérales 76a, 76b de la tête 76 peuvent être configurées pour coopérer avec le logement 45 de l'adaptateur 26 pour guider l'insertion et le maintien de la tête 76 du connecteur 24 dans le logement 45.

Au moins une face latérale 76a, 76b de la tête 76 du connecteur 24 porte ainsi un élément d'articulation 71 a, 71 b configuré pour coopérer avec un élément d'articulation 60a, 60b complémentaire porté par l'adaptateur 26.

Le connecteur 24 comprend ici deux éléments d'articulation 71 a, 71 b chacun porté par une face latérale respective de la tête 76. Les deux éléments d'articulation 71 a, 71 b portés par le connecteur 24 sont symétriques par rapport à un plan longitudinal médian du connecteur 24.

Les éléments d'articulation 71 a, 71 b sont formés par des creux s'inscrivant dans une forme sphérique. L'axe de pivotement Y s'étend radialement à ces éléments d'articulation 71 a, 71 b (figure 7).

Chaque face latérale 76a, 76b de la tête 76 comprend ainsi un élément d'articulation 71 a, 71 b, les éléments d'articulation 71 a, 71 b étant en regard l'un de l'autre et s'étendant sensiblement l'un vers l'autre. Chaque élément d'articulation 71 a, 71 b, présente également un plan de symétrie passant par l'axe de pivotement Y et perpendiculaire à l'axe longitudinal L.

Les éléments d'articulation 71 a, 71 b présentent une forme complémentaire aux éléments d'articulation 60a, 60b.

Dans cet exemple, la dimension du cercle dans lequel s'inscrit la section de chaque élément d'articulation 60a, 60b au niveau de la face latérale 76a, 76b respective portant l'élément d'articulation 71a, 71b est inférieure à la surface de ladite face latérale 76a, 76b (figure 6).

Egalement dans cet exemple, les creux des éléments d'articulation 71a, 71b du connecteur 24 sont borgnes, ce sont des calottes sphériques.

Le connecteur 24 est avantageusement unitaire, c'est-à-dire formé d'une seule pièce, par exemple en matériau plastique. Il peut ainsi être fabriqué au cours d'une unique opération de moulage, notamment par injection.

L'adaptateur 26 est monté sur le connecteur 24 par encliquetage élastique des éléments d'articulation 60a, 60b de l'adaptateur 26 dans les éléments d'articulation 71 a, 71 b du connecteur 24.

L'assemblage de l'adaptateur 26 sur le connecteur 24 est réalisé uniquement par une translation verticale selon un axe perpendiculaire à la paroi transversale 44 de l'adaptateur 26.

Lors de cette translation, la tête 76 du connecteur 24 et les formes sphériques des éléments d'articulation 60a, 60b contraignent les flancs latéraux 42a, 42b de l'adaptateur 26 à se déformer progressivement en s'écartant l'un de l'autre.

Les flancs 42a, 42b parallèles du logement 45 de l'adaptateur 26 coopèrent avec les faces latérales 76a, 76b parallèles de la tête 76 du connecteur 24 pour guider l'insertion de la tête 76 dans le logement 45.

Les formes sphériques des éléments d'articulation 60a, 60b, 71 a, 71 b centrent le connecteur 24 dans l'adaptateur 26, engageant les protubérances de l'adaptateur 26 par encliquetage ou retour élastique dans les creux du connecteur 24.

L'adaptateur 26 est alors fixé au connecteur 24 et peut en outre pivoter sur lui autour de l'axe de pivotement Y, par coopération des éléments d'articulation 60a, 60b, 71 a, 71 b. Par ailleurs, les flancs 42a, 42b du logement 45 complémentaires aux faces latérales de la tête 76 du connecteur 24 participent au maintien de la tête 76 dans le logement 45 en empêchant le pivotement latéral (torsion) du connecteur 24 dans l'adaptateur 26.

Le guidage en pivotement du connecteur 24 dans l'adaptateur 2 est alors assuré par les éléments d'articulation 60a, 60b, 71 a, 71 b complémentaires s'inscrivant dans une forme sphérique. On obtient un contact sphérique permettant d'assurer un bon guidage en pivotement tout en diminuant les surfaces en contact lors du mouvement relatif entre le connecteur 24 et l'adaptateur 26. On limite ainsi les frottements et donc l'usure des pièces.

Les éléments d'articulation 60a, 60b, 71 a, 71 b complémentaires s'inscrivant dans une forme sphérique permettent également de centrer le connecteur 24 dans l'adaptateur 26 au moment de l'assemblage ainsi qu'une ouverture progressive des flancs 42a, 42b du logement 45 de l'adaptateur 26, ce qui permet un montage ergonomique de l'adaptateur 26 sur le connecteur 24.

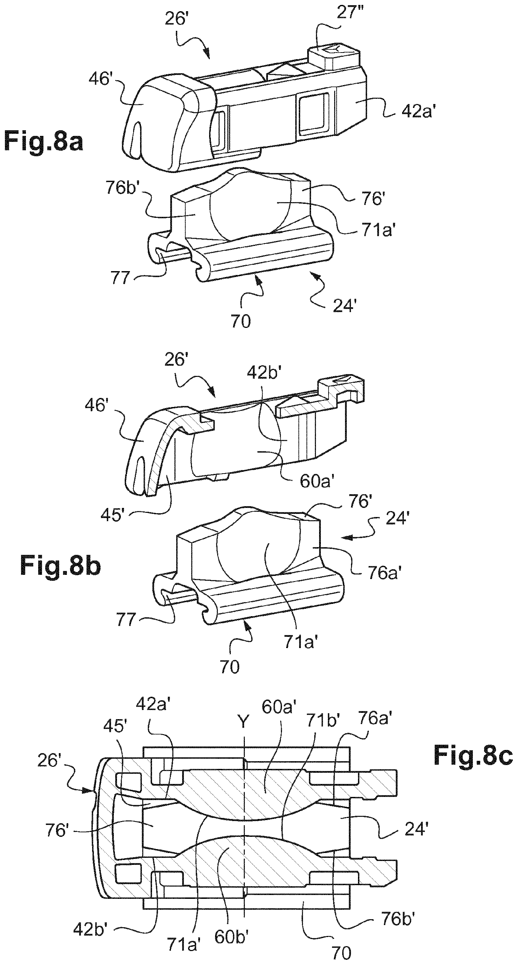

On se réfère maintenant aux figures 8a, 8b et 8c qui représentent une variante de réalisation de l'adaptateur 26' et du connecteur 24'.

Comme pour le premier exemple illustré sur les figures 2 à 7, les éléments d'articulation 60a', 60b' portés par les flancs 42a', 42b' de l'adaptateur 26' sont des protubérances s'inscrivant dans une forme sphérique et les éléments d'articulation 71 a', 71 b' portés par la tête 76' du connecteur 24' sont des creux s'inscrivant dans une forme sphérique complémentaire.

Ce mode de réalisation diffère du précédent par le fait que la dimension du cercle dans lequel s'inscrit la section de chaque élément d'articulation 60a', 60b' au niveau du flanc 42a', 42b' portant l'élément d'articulation 60a', 60b' est supérieure à la surface dudit flanc 42a', 42b'.

De façon complémentaire, la dimension du cercle dans lequel s'inscrit la section de chaque élément d'articulation 71 a', 71 b' au niveau de la face latérale 76a', 76b' portant l'élément d'articulation 71 a', 71 b' est supérieure à la surface de ladite face latérale 76a', 76b'. Les sections des éléments d'articulation 60a', 60b' au niveau des flancs 42a', 42b' et les sections des éléments d'articulation 71 a', 71 b' au niveau des faces latérales 76a', 76b' ne sont plus des cercles complets mais des portions de cercle.

Egalement dans cette variante, les faces latérales 76a, 76b de la tête 76' ne sont pas parallèles entre elles mais s'inscrivent dans une forme sphérique. Les éléments d'articulation de plus grande dimension permettent ici à la fois de centrer et de guider la tête 76' du connecteur 24' dans l'adaptateur 26'.

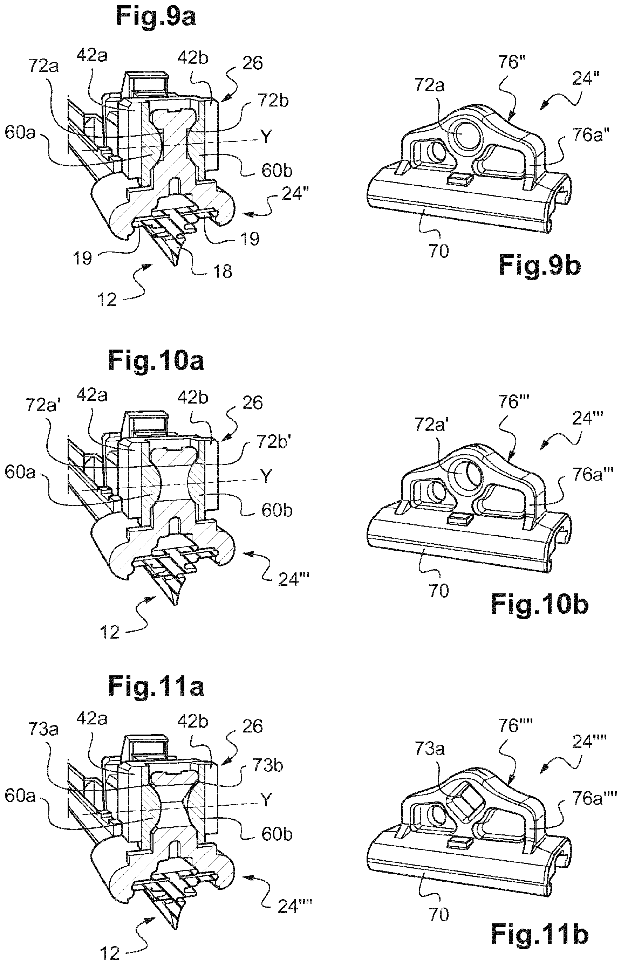

On se réfère maintenant aux figures 9a, 9b, 10a, 10b, 11 a et 11 b qui représentent d'autres variantes de réalisation du connecteur 24".

Dans ces exemples, l'élément d'articulation 60a, 60b porté par le flanc 42a, 42b de l'adaptateur 26 coopère avec les bords du creux ménagé dans la tête du connecteur.

Dans l'exemple représenté sur les figures 9a et 9b, les éléments d'articulation 60a, 60b portés par les flancs 42a, 42b de l'adaptateur 26 sont des protubérances s'inscrivant dans une forme sphérique et les éléments d'articulation 72a, 72b portés par la tête 76" du connecteur 24" sont des creux présentant des bords tronconiques.

L'axe de pivotement Y du connecteur 24"est situé au niveau de l'axe de révolution des éléments d'articulation 72a, 72b (figure 9a).

En correspondance des formes tronconiques des éléments d'articulation 72a, 72b du connecteur 24", les éléments d'articulation 60a, 60b portés par l'adaptateur 26 peuvent être des protubérances s'inscrivant dans une forme sphérique ou s'inscrivant dans une forme tronconique. Ainsi les figures 9a et 9b illustrent des protubérances s'inscrivant dans une forme sphérique.

Dans cet exemple, les creux du connecteur 24" sont borgnes. Ils peuvent aussi être traversants comme représentés sur la variante de réalisation des figures 10a, 10b. Dans cet exemple, les fonds des creux des éléments d'articulation 72a', 72b' du connecteur 24'" communiquent entre eux au moyen d'une cavité cylindrique commune.

Les contacts entre les protubérances de l'adaptateur 26 et les bords des ouvertures des creux du connecteur 24", 24'" représentés sur les figures 9a, 9b, 10a et 10b sont des contacts circulaires, ce qui réduit les frottements entre les deux pièces lors de la rotation.

On se réfère maintenant aux figures 11 a et 11 b qui représentent une autre variante de réalisation du connecteur 24"".

Dans cet exemple, les éléments d'articulation 60a, 60b portés par les flancs 42a, 42b de l'adaptateur 26 sont des protubérances s'inscrivant dans une forme sphérique et les éléments d'articulation 73a, 73b portés par la tête 76"" du connecteur 24"" sont des creux présentant des bords de forme générale polygonale à côtés chanfreinés.

La forme polygonale à côtés chanfreinés comporte au moins trois côtés chanfreinés (ou en biais) similaires, agencés pour former un polygone régulier, tel qu'un triangle, un carré, un pentagone, un hexagone, un heptagone... Sur l'exemple illustré par les figures 11a et 11b, la forme polygonale est un carré.

L'axe de pivotement Y du connecteur 24"" est l'axe de symétrie de ces éléments d'articulation 73a, 73b (figure 11a).

En correspondance des formes polygonales à côtés chanfreinés des éléments d'articulation 73a, 73b du connecteur 24"", les éléments d'articulation 60a, 60b portés par l'adaptateur 26 peuvent être des protubérances s'inscrivant dans une forme sphérique ou présentant une forme tronconique. Ainsi dans l'exemple des figures 11 a et 11 b, les éléments d'articulation 60a, 60b portés par l'adaptateur 26 sont des protubérances s'inscrivant dans une forme sphérique.

Dans cet exemple, les creux du connecteur 24"" sont traversants et communiquent entre eux au moyen d'une cavité commune de forme parallélépipédique. Les creux du connecteur 24"" peuvent aussi être borgnes.

D'autres combinaisons de réalisation sont possibles.

L'élément d'articulation porté par le flanc 42a, 42b de l'adaptateur 26 peut être une protubérance de forme tronconique. L'élément d'articulation 71 a, 71 b, 72a, 72b, 73a, 73b porté par la tête 76 du connecteur 24 peut alors être un creux dont l'ouverture présente une forme complémentaire tronconique ou un creux cylindrique ou un creux dont l'ouverture présente une forme complémentaire polygonale à côtés chanfreinés.

L'élément d'articulation 60a, 60b porté par le flanc 42a, 42b de l'adaptateur 26 peut être une protubérance présentant une forme polygonale à côtés chanfreinés. L'élément d'articulation (71 a, 71 b) porté par la tête 76 du connecteur 24 peut alors être un creux cylindrique.

Egalement, l'adaptateur et le connecteur peuvent comporter chacun deux éléments d'articulation configurés pour coopérer ensemble, un sur chaque flanc de l'adaptateur et un sur chaque face latérale de la tête du connecteur, qui peuvent être symétriques ou non. Par exemple, l'adaptateur peut comporter deux éléments d'articulation s'inscrivant dans une forme sphérique et le connecteur peut présenter un creux à bords tronconiques d'un côté et un creux s'inscrivant dans une forme complémentaire sphérique de l'autre côté.

## Revendications

1. Adaptateur (26, 26') permettant de relier un connecteur (24, 24',24",24"',24"") de balai d'essuie-glace (10) à un bras d'entraînement (14), l'adaptateur (26, 26') présentant un logement (45) délimité par deux flancs (42a, 42b) destiné à recevoir une tête (76) du connecteur (24, 24',24",24"',24""), la tête (76) du connecteur (24, 24',24",24"',24"") et au moins un flanc (42a, 42b) de l'adaptateur (26, 26') portant des éléments d'articulation complémentaires configurés pour coopérer ensemble en définissant un moyen de fixation et de pivotement entre l'adaptateur (26, 26') et le connecteur (24, 24',24",24"',24""), **caractérisé en ce que** l'élément d'articulation (60a, 60b) porté par le flanc (42a, 42b) de l'adaptateur (26, 26') est une protubérance ayant une section transversale régulière, non cylindrique et conformée pour coopérer avec un creux correspondant ménagé dans la tête du connecteur (24, 24',24",24"',24""), la protubérance faisant saillie d'une paroi (42a, 42) en s'étendant dans le logement (45).

2. Adaptateur (26, 26') selon la revendication précédente, **caractérisé en ce que** la protubérance s'inscrit dans une forme sphérique ou présente une forme tronconique ou une forme générale polygonale à côtés chanfreinés.

3. Adaptateur (26, 26') selon l'une des revendications précédentes, **caractérisé en ce qu'**il comprend deux éléments d'articulation (60a, 60b) chacun porté par un flanc (42a, 42b) respectif.

4. Adaptateur (26, 26') selon la revendication précédente, **caractérisé en ce que** les éléments d'articulation (60a, 60b) sont symétriques par rapport à un plan longitudinal médian de l'adaptateur (26, 26'), perpendiculaire à une paroi transversale (44) de l'adaptateur (26, 26') reliant les deux flancs (42a, 42b).

5. Adaptateur (26) selon l'une des revendications précédentes, **caractérisé en ce que** les flancs (42a, 42b) du logement (45) sont parallèles entre eux et configurés pour coopérer avec la tête (76) du connecteur (24, 24",24"',24"") de manière à guider l'insertion et le maintien de la tête du connecteur dans le logement (45).

6. Adaptateur (26') selon l'une des revendications précédentes, **caractérisé en ce que** la protubérance s'inscrit dans une forme sphérique, la dimension du cercle dans lequel s'inscrit la section de l'élément d'articulation (60a', 60b') au niveau du flanc (42a', 42b') portant l'élément d'articulation (60a', 60b') étant supérieure à la surface dudit flanc (42a', 42b').

7. Connecteur (24, 24',24",24"',24"") permettant de relier un balai d'essuie-glace (10) à un adaptateur (26, 26') de bras d'entraînement (14), le connecteur (24, 24',24",24"',24"") présentant une tête (76) surmontant une embase (70) destinée à être fixée au balai d'essuie-glace (10), la tête (76) étant configurée pour être reçue dans un logement (45) de l'adaptateur (26, 26'), la tête (76) du connecteur (24, 24',24",24"',24"") et au moins un flanc (42a, 42b) de l'adaptateur (26, 26') portant des éléments d'articulation complémentaires configurés pour coopérer pour définir un moyen de fixation et de pivotement entre l'adaptateur (26, 26') et le connecteur (24, 24',24",24"',24""), **caractérisé en ce que** l'élément d'articulation (71 a, 71 b) porté par la tête (76) du connecteur (24, 24',24",24"',24"") est un creux ayant une ouverture à bord régulier non cylindrique conformé pour coopérer avec une protubérance de l'élément d'articulation (60a, 60b) porté par le flanc (42a, 42b) de l'adaptateur (26, 26').

8. Connecteur (24, 24',24",24"',24"") selon la revendication précédente, **caractérisé en ce que** le creux s'inscrit dans une forme sphérique ou tronconique ou polygonale à côtés chanfreinés.

9. Connecteur (24, 24',24",24"',24"") selon l'une des revendications 7 ou 8, **caractérisé en ce qu'**il comprend deux éléments d'articulation (71 a, 71 b) chacun porté par une face latérale (76a, 76b) respective de la tête (76).

10. Connecteur (24, 24',24",24"',24"") selon la revendication précédente, **caractérisé en ce que** les éléments d'articulation (71 a, 71 b) sont symétriques par rapport à un plan longitudinal médian du connecteur (24).

11. Connecteur (24, 24',24",24"',24"") selon l'une des revendications 9 ou 10, **caractérisé en ce que** les creux sont borgnes.

12. Connecteur (24, 24",24"',24"") selon l'une des revendications 7 à 11, **caractérisé en ce que** les faces latérales (76a, 76b) de la tête (76) sont parallèles entre elles et configurées pour coopérer avec le logement (45) de l'adaptateur (26) pour guider l'insertion et le maintien de la tête (76) du connecteur (24, 24",24"',24"") dans le logement (45).

13. Connecteur (24') selon l'une des revendications 7 à 12, **caractérisé en ce que** le creux s'inscrit dans une forme sphérique, la dimension du cercle dans lequel s'inscrit la section de l'élément d'articulation (60a', 60b') dans la face latérale (76a, 76b) portant l'élément d'articulation (71 a', 71 b') étant supérieure à la surface de ladite face latérale (76a', 76b').

14. Dispositif de connexion (1) comprenant un adaptateur (26, 26') selon l'une quelconque des revendications 1 à 6 et un connecteur (24, 24', 24",24"',24"") selon l'une des revendications 7 à 13.

15. Dispositif de connexion (1) selon la revendication précédente, **caractérisé en ce que** le moyen de fixation et de pivotement est réalisé par encliquetage élastique.
